# EUROPÄISCHE PATENTSCHRIFT

(11) **EP 1 570 230 B1**
(45) Veröffentlichungstag und Bekanntmachung des Hinweises auf die Patenterteilung: **15.03.2017**
(21) Anmeldenummer: 03782383.8
(22) Anmeldetag: 12.12.2003
(51) Int. Cl.: G01B 5/012, G01B 7/00, G01B 7/012, B23B 31/00

(54) **ZENTRIERVORRICHTUNG, INSBESONDERE FÜR EINE TASTMESSVORRICHTUNG**
CENTERING DEVICE, IN PARTICULAR FOR A PROBE MEASURING DEVICE
DISPOSITIF DE CENTRAGE, DESTINE NOTAMMENT A UN DISPOSITIF DE MESURE PAR PALPAGE

(30) Priorität: 13.12.2002 DE 10258448
(43) Veröffentlichungstag der Anmeldung: 07.09.2005
(73) Patentinhaber: Franz Haimer Maschinenbau KG, 86568 Hollenbach-Igenhausen (DE)
(72) Erfinder: HAIMER, Franz, 86568 Hollenbach-Igenhausen (DE)
(74) Vertreter: Weickmann & Weickmann PartmbB
(86) Internationale Anmeldenummer: PCT/EP2003/014142
(87) Internationale Veröffentlichungsnummer: WO 2004/055470

(56) Entgegenhaltungen:
- DE-A- 4 100 323
- DE-A- 19 647 514
- US-A- 4 543 859
- US-A- 4 930 957
- US-A- 5 212 872

## Beschreibung

Die Erfindung betrifft eine Zentriervorrichtung, insbesondere für eine Tastmessvorrichtung.

Beispielsweise aus den deutschen Offenlegungsschriften DE-A-41 00 232, DE-A-195 02 840 und DE-A-100 14 630 sind Mehrkoordinaten-Tastmessgeräte bekannt, deren Tastarm in Richtung einer durch Führungen eines Gehäuses definierten Hauptkoordinatenachse verschiebbar ist und mittels eines Universalgelenks quer zu dieser Hauptkoordinatenachse auslenkbar ist. Das Gehäuse ist an einem Tragschaft gehalten, dessen Schaftachse im Gebrauchszustand gleichachsig zur Hauptkoordinatenachse verläuft. Um die Hauptkoordinatenachse des Gehäuses relativ zur Schaftachse zentrieren zu können, ist das Gehäuse dem Tragschaft zugewandt mit einer achsnormalen Führungsfläche für den Tragschaft versehen und greif mit einem Zapfen in eine radiales Spiel zwischen dem Tragschaft und dem Zapfen zulassende Aussparung des Tragschafts ein. Das Gehäuse ist damit achsparallel zu dem Tragschaft beweglich und kann mit Hilfe mehrerer an dem Tragschaft gehaltener, gegen den Zapfen zustellbarer Stellschrauben zentriert werden. Für die Fixierung ist eine axiale Spannschraube vorgesehen, die den Tragschaft mit dem Gehäuse verschraubt. Eine solche durch den Tragschaft und das Gehäuse gebildete Zentriervorrichtung bedingt jedoch vergleichsweise hohen Herstellungsaufwand, insbesondere aufgrund der dort verwendeten Führungsflächen und Arretierungsmittel.

Aus DE 196 47 514 A1 ist ein Mehrkoordinaten-Tastmessgerät bekannt, dessen Tastarm über eine Parallelogrammführung an einem Tragschaft allseitig quer zur Tragschaftachse auslenkbar gehalten ist. Die Parallelogrammführung umfasst zwei axial gegeneinander versetzte Blattfederpaare, deren Auslenkrichtungen um 90° um die Geräteträgerachse herum versetzt sind. Der Tastarm kann über die beiden Blattfederpaare allseitig gegen die Tragschaftachse achsparallel versetzt werden. Den Blattfederpaaren zugeordnete Sensoren liefern dem Achsversatz entsprechende Signale. Ein Positionsoffset der durch die Blattfederpaare bestimmten Nullstellung des Tastarms wird durch rechnerische Korrektur der Signale der Sensoren berücksichtigt. Eine mechanische Zentrierung des Tastarms relativ zur Tragschaftachse ist nicht vorgesehen.

Aus US 4,930,957 ist ein Werkzeugträger bekannt, bei welchem eine Spannzange über einen Schaft an einer Tragplatte gehalten ist. Aus dem Schaft sind integral zwei Parallelogrammlenkerpaare freigeschnitten. Die beiden Parallelogrammlenkerpaare sind einerseits in axialer Richtung des Schafts gegeneinander versetzt und andererseits um eine zur Spannzangenachse achsparallele Trägerachse der Tragplatte gegeneinander um 90° winkelversetzt. Die beiden Parallelogrammlenkerpaare erlauben es, die Spannzangenachse achsparallel zur Trägerachse allseitig radial zu verschieben. Jedem Parallelogrammlenkerpaar sind zwei sich gegenüberliegende Stellschrauben zugeordnet, mittels der die Positionen der Parallelogrammlenkerpaare gesondert voneinander fixiert werden können.

Es ist Aufgabe der Erfindung, eine insbesondere für eine Tastmessvorrichtung geeignete Zentriervorrichtung anzugeben, die sich einfacher als bisher herstellen lässt.

Die Erfindung ist durch die in Anspruch 1 angegebenen Merkmale gekennzeichnet.

Eine solche Zentriervorrichtung, insbesondere für eine Tastmessvorrichtung umfasst:
- einen eine Geräteachse definierenden Geräteträger,
- einen eine Schaftachse definierenden Tragschaft,
- eine den Geräteträger mit zur Schaftachse paralleler Geräteachse radial zu der Schaftachse beweglich, jedoch fixierbar an dem Tragschaft haltende Zentrierhalterung, wobei die Zentrierhalterung als Parallelogrammführung mit einem um die Schaftachse und die Geräteachse herum verteilten, längs dieser Achsen sich erstreckenden Parallelogrammlenkerbereich ausgebildet.

Der Parallelogrammlenkerbereich ist durch einen zu der Schaftachse und der Geräteachse achsparallelen kreiszylindrischen Hülsenabschnitt gebildet.

Eine solche Zentrierhalterung kommt ohne achsnormale Führungsflächen aus und kann deshalb wesentlich einfacher und damit kostengünstiger als bei herkömmlichen Zentriervorrichtungen hergestellt werden. Wenngleich die erfindungsgemäße Zentriervorrichtung bevorzugt bei einer Tastmessvorrichtung eingesetzt wird, wie sie beispielsweise in den deutschen Offenlegungsschriften DE-A-41 00 323, DE-A-195 02 840 oder DE-A-100 14 630 beschrieben ist, so lässt sich eine solche Zentriervorrichtung auch bei anderen Anwendungsgebieten mit Vorteil einsetzen. Beispielsweise kann die Zentriervorrichtung Bestandteil eines Werkzeughalters sein, welcher ein Rotationswerkzeug, wie z.B. einen Bohrer, Fräser oder dergleichen zentrisch zur Drehachse der Spindel einer Werkzeugmaschine hält. Dies gilt insbesondere für solche Werkzeughalter, die das Rotationswerkzeug eingeschrumpft in einen beispielsweise mittels induktiver Erwärmung wärmedehnbaren Hülsenabschnitt halten. Solche Werkzeughalter haben für den Anschluss an die Werkzeugmaschinenspindel eine Normkupplkung, beispielsweise in Form eines Steilkegels oder dergleichen. Hierbei ist die erfindungsgemäße Zentriervorrichtung im Kraftübertragungsweg zwischen der Normkupplung des Werkzeughalters und dem das Rotationswerkzeug haltenden Hülsenabschnitt angeordnet. In einem solchen Fall ist der Tragschaft der erfindungsgemäßen Zentriervorrichtung als Normkupplung und der Geräteträger als Hülsenabschnitt ausgebildet.

Bei dem Parallelogrammlenkerbereich kann es sich um eine Vielzahl von voneinander gesonderter, um die Trag- bzw. Geräteachse herum angeordneter, allseitig auslenkbarer Lenker, beispielsweise in Form von Stäben handeln, insbesondere, wenn diese Stäbe nach Art eines segmentierten achsparallelen kreiszylindrischen Hülsenabschnitts angeordnet sind. Exakter justierbar und auch einfacher herstellbar ist jedoch eine Ausführungsform, bei welcher der Hülsenabschnitt in Umfangsrichtung geschlossenwandig ausgebildet ist.

In einer bevorzugten Ausgestaltung umfasst die Zentrierhalterung einen die Schaftachse und die Geräteachse umschließenden, den Tragschaft mit dem Geräteträger verbindenden Verbindungsflansch, der auf seinen axial von einander abgewandten Seiten zueinander konzentrische kreisförmige Nuten aufweist, die sich axial überlappen und radial zwischen sich den Hülsenabschnitt begrenzen. Solche Nuten lassen sich in den Verbindungsflansch problemlos einarbeiten und bestimmen durch ihre axiale Tiefe und ihren radialen Abstand voneinander die radialen Auslenkeigenschaften des Hülsenabschnitts. Die über die Nuten nach radial innen und nach radial außen überstehenden Ringbereiche des Verbindungsflansches steifen die Zentrierhalterung im übrigen aus, so dass die Parallelogrammbewegung im Wesentlichen ausschließlich auf der Verformung des Hülsenabschnitts beruht.

Sowohl in Ausführungsformen, bei welchen der Parallelogrammlenkerbereich aus Einzelstäben gebildet ist, als auch bei Ausführungsformen mit als geschlossener Hülsenabschnitt ausgebildetem Parallelogrammlenkerbereich ist vorgesehen, dass der Parallelogrammlenkerbereich an seinem einen axialen Ende mit einem ersten Ringabschnitt der Zentrierhalterung und an seinem anderen axialen Ende mit einem zweiten Ringabschnitt der Zentrierhalterung verbunden ist und dass einer dieser Ringabschnitte wenigstens eine, vorzugsweise jedoch
wenigstens drei in Umfangsrichtung verteilte Stellschrauben trägt, die im Bereich des anderen dieser Ringabschnitte radial abgestützt sind. Die gemeinsamen Abschnitte steifen die axialen Enden des Parallelogrammlenkerbereichs relativ zueinander aus, wobei die zwischen den beiden Ringabschnitten sich abstützenden Stellschrauben für eine gleichmäßige Auslenkung des Lenkerbereichs sorgen. Zweckmäßigerweise sind die beiden Ringabschnitte koaxial ineinander angeordnet, wobei der äußere Ringabschnitt die Stellschrauben radial schraubbar trägt. Dies erleichtert die Justierung der Stellschrauben.

Bei der Zentrierhalterung kann es sich um ein vom Tragschaft und dem Gehäuse gesondertes Bauteil handeln. In einer bevorzugten, die Herstellung vereinfachenden Variante ist jedoch der Parallelogrammlenkerbereich mit ihren axialen Enden einstückig integral mit dem Tragschaft oder/und dem Geräteträger ausgebildet.

Im Folgenden wird ein Ausführungsbeispiel der Erfindung anhand einer Zeichnung näher erläutert. Hierbei zeigt:
Fig. 1 einen Axiallängsschnitt durch ein Tastmessgerät mit einer erfindungsgemäßen Zentrierhalterung und
Fig. 2 eine Axialansicht der Zentrierhalterung.

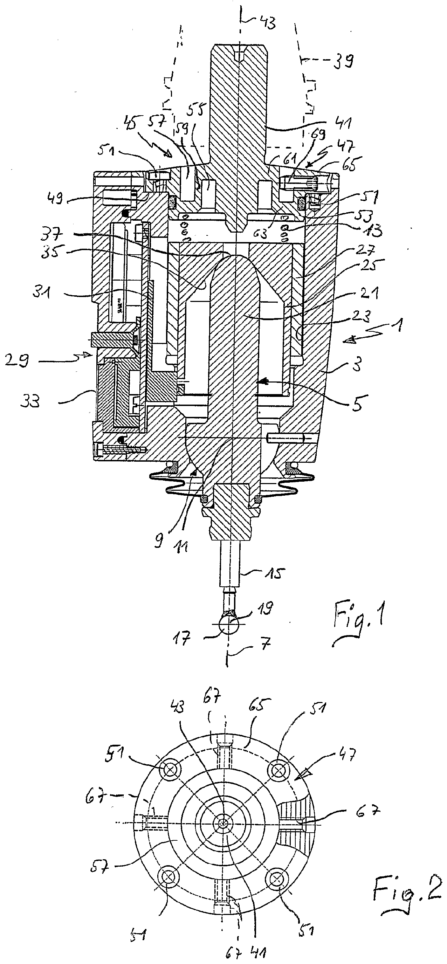

Das in Fig. 1 allgemein mit 1 bezeichnete Tastmessgerät umfasst ein Gehäuse 3, an dem ein allgemein mit 5 bezeichneter Tasthebel in Richtung einer durch das Gehäuse 3 definierten Messachse 7 verschiebbar geführt ist. Der Tasthebel 5 ist mittels eines Universalgelenks, hier in Form eines Kugelgelenks 9 darüber hinaus um einen auf der Messachse 7 liegenden Schwenkpunkt 11 allseitig schwenkbar an dem Gehäuse 3 geführt und wird von einer Rückstellfeder 13 in nachfolgend noch näher erläuterter Weise in die in der Zeichnung dargestellte Ruhestellung federnd vorgespannt. Der Tasthebel 5 hat einen aus dem Gehäuse herausragenden Tastarm 15, dessen freies durch eine Kugel gebildetes Tastende 17 einen in der Ruhestellung des Tasthebels 5 auf der Messachse 7 liegenden Tast-Bezugspunkt 19 definiert. Bezogen auf den Schwenkpunkt 11 ragt ein Koppelarm 21 des Tasthebels 5 entgegengesetzt zum Tastarm 15 in eine kreiszylindrische, zur Messachse 7 zentrische Führungsöffnung 23 des Gehäuses 3 hinein. In der Führungsöffnung 23 ist ein im Wesentlichen hülsenförmiges Kopplungsstück 25 in Richtung der Messachse 7 mittels einer Führungshülse 27, beispielsweise einer Kugel-Führungsbüchse der in DE-A-100 14 630 erläuterten Art, verschiebbar geführt. Eine an dem Gehäuse 3 gehaltene digitale Wegmessvorrichtung 29 erfasst mittels eines digitalen Wegsensors 31 die Position des Kopplungsstücks 25 relativ zum Gehäuse 3 und zeigt den Wert der Auslenkung bezogen auf die in Fig. 1 dargestellte Ruhestellung des Tasthebels 5 auf einem Display 33 an. Anstelle der digitalen Wegmessvorrichtung 29 kann auch eine mechanische Längenmessuhr vorgesehen sein.

Das Kopplungsstück 25 hat im Bereich seines dem Schwenkpunkt 11 axial fernen Endes eine innere Steuerfläche 35 in Form einer Kegelstumpffläche mit geradliniger Erzeugender, mit der es an einer am freien Ende des Koppelarms 21 gebildeten konvexen äußeren Steuerfläche 37 des Tasthebels 5 anliegt. Die innere Steuerfläche 35 ist zur Messachse 7 rotationssymmetrisch, während die äußere Steuerfläche 37 zu der in der Ruhestellung des Tasthebels 5 mit der Messachse 7 zusammenfallenden Geraden durch den Tast-Bezugspunkt 19 und den Schwenkpunkt 11 rotationssymmetrisch ist. Die äußere Steuerfläche 37 hat eine kreisabschnittförmige Erzeugende. Die Rückholfeder 13 spannt das Kopplungsstück 25 in Richtung auf das Tastende 17 zu vor und sorgt zugleich für einen Anlagekontaktdruck der aneinander anliegenden Steuerflächen 35, 37.

Im Betrieb wird das Tastmessgerät 1 mittels einer bei 39 angedeuteten, zur Messachse 7 gleichachsigen Normkupplung, beispielsweise einem Steilkegelschaft, in einer Werkzeugmaschine oder einem Messgerät oder dergleichen gehalten. Bei einer im Messbetrieb sich ergebenden Stellbewegung des Tastendes 17 in Richtung der Messachse 7 nimmt der Koppelarm 21 das Kopplungsstück 25 mit, welches seinerseits die Wegmessvorrichtung 29 stellt. Bei einer Stellbewegung des Tastendes 17 quer zur Messachse 7 schwenkt der Koppelarm 21 um den durch das Kugelgelenk 9 definierten Schwenkpunkt 11. Die bei dieser Schwenkbewegung des Koppelarms 21 entlang ihrer Erzeugenden aneinander gleitenden Steuerflächen 35, 37 setzen die Schwenkbewegung des Tasthebels 5 in eine axiale Bewegung des hülsenförmigen Kopplungsstück 25 um, derart, dass die Wegmessvorrichtung 29 den radialen Abstand des Tast-Bezugspunkts 19 von der Messachse 7 misst. Für weitere Einzelheiten eines derartigen Tastmessgeräts wird auf DE-A-100 14 630 Bezug genommen.

Das Tastmessgerät 1 ist mit einem Tragschaft 41 versehen, mit dem es in die Normkupplung 39 oder in eine sonstige Werkzeugaufnahme der Werkzeugmaschine eingespannt werden kann. Für exakte Messungen ist es erforderlich, dass die durch das Gehäuse 3 bzw. den Tasthebel 5 definierte Messachse 7 gleichachsig zu einer durch den Tragschaft 41 definierten zentrischen Schaftachse 43 verläuft. Um radiale Fluchtungsfehler ausgleichen zu können, ist das Gehäuse 3 über eine Zentrierhalterung 45 an dem Tragschaft 41 gehalten. Die Zentrierhalterung 45 erlaubt eine achsparallele Justierung der Messachse 7 relativ zur Schaftachse 43. Die Zentrierhalterung 45 umfasst hierzu einen integral einstückig an dem Tragschaft 41 angeformten, radial abstehenden Verbindungsflansch 47, der an einer achsnormalen Passfläche 49 mit Hilfe mehrerer axialer Schrauben 51 angeschraubt ist. Der Verbindungsflansch 47 bildet zum Tastende 17 hin einen Zentrieransatz 53, mit dem er in der Führungsöffnung 23 eng passend radial geführt ist.

Auf einander axial gegenüberliegenden Seiten ist der Verbindungsflansch 47 mit zur Schaftachse 43 konzentrischen Ringnuten 55, 57 versehen, die sich in axialer Richtung überlappen und zwischen sich einen kreiszylindrischen achsparallel geraden Hülsenabschnitt 59 begrenzen. Ein durch den Boden der radial inneren Ringnut 55 gebildeter Ringabschnitt 61 verbindet das dem Tastende 17 abgewandte axiale Ende des Hülsenabschnitts 59 mit dem Tragschaft 41, während das axial andere Ende des Hülsenabschnitts 59 durch einen vom Boden 63 der äußeren Ringnut 57 gebildeten Ringabschnitt mit dem am Gehäuse 3 angeschraubten Umfangsbereich 65 des Verbindungsflansches 47 verbunden ist.

In wenigstens drei, hier vier, in Umfangsrichtung verteilt angeordneten radialen Gewindelöchern 67 sitzen von radial außen her zugängliche Stellschrauben 69, die sich mit ihren inneren Enden nahe des dem Tastendes 17 axial abgewandten Endes an dem Hülsenabschnitt 59 und damit im Bereich des Ringabschnitts 61 an diesem abstützen.

Der Hülsenabschnitt 59 bildet eine quer zur Schaftachse 43 allseitig auslenkbare Parallelogrammführung, bei welcher der biegeelastisch beanspruchte Hülsenabschnitt 59 einen allseitig auslenkbaren Parallelogrammlenker bildet. Durch Justierung der Stellschrauben 69 wird der Tragschaft 41 relativ zur Messachse 7 parallel verschoben, wobei die Stellschrauben 69 zugleich die Betriebsfixierung übernehmen. Da vier um jeweils 90° gegeneinander versetzte Stellschrauben 69 vorgesehen sind, können die Stellschrauben paarweise gekontert werden.

Im dargestellten Ausführungsbeispiel ist die Parallelogrammführung durch einen ringförmig geschlossenen Hülsenansatz realisiert. Anstelle des ringförmig geschlossenen Hülsenansatzes kann auch ein in Umfangsrichtung segmentierter Hülsenansatz vorgesehen sein, oder aber der Hülsenansatz ist durch einen Käfig aus axial verlaufenden Stäben gebildet. In einer weiteren Variante kann der Verbindungsflansch 47 nicht nur mit dem Tragschaft 41 einstückig verbunden sein, sondern auch mit dem Gehäuse 3. Insbesondere die letztgenannte Variante eignet sich für andere Anwendungen der Zentrierhalterung 45, beispielsweise für Anwendungen, bei welchen die dem Gehäuse 3 entsprechende Komponente einen Hülsenabschnitt zur Schrumpfhalterung eines Werkzeugschafts eines Rotationswerkzeugs bildet, wie dies bei zum Beispiel induktiv wärmedehnbaren Werkzeughaltern üblich ist. Der Tragschaft kann dann unmittelbar als Normkupplung ähnlich der Normkupplung 39 ausgebildet sein.

## Patentansprüche

1. Zentriervorrichtung, insbesondere für eine Tastmessvorrichtung, umfassend:
- einen eine Geräteachse (7) definierenden Geräteträger (3),
- einen eine Schaftachse (43) definierenden Tragschaft (41),
- eine den Geräteträger (3) mit zur Schaftachse (43) paralleler Geräteachse (7) radial zu der Schaftachse (43) beweglich jedoch fixierbar an dem Tragschaft (41) haltende Zentrierhalterung (45),
wobei die Zentrierhalterung (45) als Parallelogrammführung mit einem um die Schaftachse (43) und die Geräteachse (7) herum verteilten, längs dieser Achsen (7, 43) sich erstreckenden Parallelogrammlenkerbereich (59) ausgebildet ist,
**dadurch gekennzeichnet, dass** der Parallelogrammlenkerbereich durch einen zu der Schaftachse (43) und der Geräteachse (7) achsparallelen kreiszylindrischen Hülsenabschnitt (59) gebildet ist.

2. Zentriervorrichtung nach Anspruch 1, **dadurch gekennzeichnet, dass** der Hülsenabschnitt (59) in Umfangsrichtung geschlossenwandig ausgebildet ist.

3. Zentriervorrichtung nach Anspruch 1 oder 2, **dadurch gekennzeichnet, dass** die Zentrierhalterung (45) einen die Schaftachse (43) und die Geräteachse (7) umschließenden, den Tragschaft (41) mit dem Geräteträger (3) verbindenden Verbindungsflansch (47) umfasst, der auf seinen axial voneinander abgewandten Seiten zueinander konzentrische, kreisringförmige Nuten (55, 57) aufweist, die sich axial überlappen und radial zwischen sich den Hülsenabschnitt (59) begrenzen.

4. Zentriervorrichtung nach einem der Ansprüche 1 bis 3, **dadurch gekennzeichnet, dass** der Parallelogrammlenkerbereich an seinem einen axialen Ende mit einem ersten Ringabschnitt (61) der Zentrierhalterung (45) und an seinem anderen axialen Ende mit einem zweiten Ringabschnitt (63, 65) der Zentrierhalterung (45) verbunden ist und dass einer (63, 65) dieser Ringabschnitte wenigstens eine Stellschraube (69) trägt, die im Bereich des anderen (61) dieser Ringabschnitte radial abgestützt ist.

5. Zentriervorrichtung nach Anspruch 4, **dadurch gekennzeichnet, dass** der eine Ringabschnitt (63, 65) wenigstens drei in Umfangsrichtung verteilte Stellschrauben (69) trägt.

6. Zentriervorrichtung nach Anspruch 4 oder 5, **dadurch gekennzeichnet, dass** die beiden Ringabschnitte (61, 63, 65) koaxial ineinander angeordnet sind und der äußere Ringabschnitt (63, 65) die wenigstens eine Stellschraube (69) radial schraubbar trägt.

7. Zentriervorrichtung nach einem der Ansprüche 1 bis 6, **dadurch gekennzeichnet, dass** der Parallelogrammlenkerbereich (59) mit seinen axialen Enden einstückig integral mit dem Tragschaft (41) oder/und dem Geräteträger (3) ausgebildet ist.

## Claims

1. Centring device, in particular for a scanning measurement device, comprising:
- an apparatus support (3) defining an apparatus axis (7),
- a support shaft (41) defining a shaft axis (43),
- a centring holder (45) that holds the apparatus support (3) such that the apparatus axis (7) is parallel to the shaft axis (43) and so that said support is movable radially relative to the shaft axis (43) but is fixable to the support shaft (41),
the centring holder (45) being formed as a parallelogram guide having a parallelogram guiding region (59) that is arranged around the shaft axis (43) and the apparatus axis (7) and extends along said axes (7, 43),
**characterised in that** the parallelogram guiding region is formed by a circular cylindrical sleeve portion (59) which extends axially in parallel with the shaft axis (43) and the apparatus axis (7).

2. Centring device according to claim 1, **characterised in that** the walls of the sleeve portion (59) are closed in the circumferential direction.

3. Centring device according to either claim 1 or claim 2, **characterised in that** the centring holder (45) comprises a connecting flange (47) which surrounds the shaft axis (43) and the apparatus axis (7), connects the support shaft (41) to the apparatus support (3) and comprises concentric annular grooves (55, 57) on its sides that axially face away from one another, which grooves axially overlap and radially delimit the sleeve portion (59) therebetween.

4. Centring device according to any of claims 1 to 3, **characterised in that** the parallelogram guiding region is connected, at one axial end thereof, to a first annular portion (61) of the centring holder (45) and, at the other axial end thereof, to a second annular portion (63, 65) of the centring holder (45), and **in that** one (63, 65) of these annular portions bears at least one adjusting screw (69), which is radially supported in the region of the other (61) of these annular portions.

5. Centring device according to claim 4, **characterised in that** one annular portion (63, 65) bears at least three adjusting screws (69) distributed in the circumferential direction.

6. Centring device according to either claim 4 or claim 5, **characterised in that** the two annular portions (61, 63, 65) are arranged coaxially inside one another and the outer annular portion (63, 65) bears the at least one adjusting screw (69) such that said screw can be radially screwed.

7. Centring device according to any of claims 1 to 6, **characterised in that** the parallelogram guiding region (59) is integrally formed with the support shaft (41) and/or the apparatus support (3) by means of its axial ends.

## Revendications

1. Dispositif de centrage, en particulier pour un dispositif de mesure à palpeur, comprenant :
- un porte-appareil (3) définissant un axe d'appareil (7),
- une tige porteuse (41) définissant un axe de tige (43),
- un support de centrage (45) maintenant au niveau de la tige porteuse (41), de manière mobile mais fixable, radialement par rapport à l'axe de tige (43), le porte-appareil (3) avec un axe d'appareil (7) parallèle à l'axe de tige (43),
dans lequel le support de centrage (45) est réalisé en tant que guide à parallélogramme avec une zone de suspension de parallélogramme (59) distribuée autour de l'axe de tige (43) et de l'axe d'appareil (7) et s'étendant le long de ces axes (7,43),
**caractérisé en ce que** la zone de suspension de parallélogramme est formée par une section de manchon (59) cylindrique circulaire axialement parallèle par rapport à l'axe de tige (43) et à l'axe d'appareil (7).

2. Dispositif de centrage selon la revendication 1, **caractérisé en ce que** la section de manchon (59) est réalisée en paroi fermée dans la direction périphérique.

3. Dispositif de centrage selon la revendication 1 ou 2, **caractérisé en ce que** le support de centrage (45) comprend une bride de liaison (47) enserrant l'axe de tige (43) et l'axe d'appareil (7), reliant la tige porteuse (41) au porte-appareil (3), laquelle bride présente sur ses côtés axialement opposés l'un à l'autre des rainures circulaires annulaires (55, 57) mutuellement concentriques qui se chevauchent axialement et délimitent radialement entre elles la section de manchon (59).

4. Dispositif de centrage selon l'une quelconque des revendications 1 à 3, **caractérisé en ce que** la zone de suspension de parallélogramme est reliée, au niveau de sa première extrémité axiale, à une première section annulaire (61) du support de centrage (45) et, au niveau de son autre extrémité axiale, à une seconde section annulaire (63, 65) du support de centrage (45), et **en ce que** l'une (63, 65) de ces sections annulaires porte au moins une vis de réglage (69) qui est supportée radialement dans la zone de l'autre (61) de ces sections annulaires.

5. Dispositif de centrage selon la revendication 4, **caractérisé en ce que** la une section annulaire (63, 65) porte au moins trois vis de réglage (69) distribuées dans la direction périphérique.

6. Dispositif de centrage selon la revendication 4 ou 5, **caractérisé en ce que** les deux sections annulaires (61, 63, 65) sont agencées co-axialement l'une dans l'autre et la section annulaire (63, 65) externe porte l'au moins une vis de réglage (69) qui peut être vissée radialement.

7. Dispositif de centrage selon l'une quelconque des revendications 1 à 6, **caractérisé en ce que** la zone de suspension de parallélogramme (59) est réalisée avec ses extrémités axiales d'un seul tenant avec la tige porteuse (41) et/ou le porte-appareil (3).
